(19) Europäisches Patentamt
European Patent Office
Office européen des brevets

(11) EP 3 885 989 A1

(12) EUROPEAN PATENT APPLICATION

(43) Date of publication:
29.09.2021 Bulletin 2021/39

(51) Int Cl.:
G06K 9/34 (2006.01)     G06K 9/62 (2006.01)
G06T 7/00 (2017.01)

(21) Application number: 20315058.6

(22) Date of filing: 26.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: ANOTHER BRAIN
75009 Paris (FR)

(72) Inventors:
• Pinto, Guillaume
75009 Paris (FR)
• Meyre, Arthur
75009 Paris (FR)

(74) Representative: Marks & Clerk France
Immeuble "Visium"
22, avenue Aristide Briand
94117 Arcueil Cedex (FR)

(54) ANOMALY DETECTION BASED ON AN AUTOENCODER AND CLUSTERING

(57) The invention discloses an anomaly detection method of objects in a digital image, wherein the image of the object is encoded and decoded by an autoencoder, then a pixel-wise difference is calculated between the input image of the object, and the reconstructed image of the object. Pixels whose pixel-wise difference is above a threshold are considered as dissimilar pixels, and the presence of clusters of dissimilar pixels is tested. A cluster of dissimilar pixel is considered as representing an anomaly.

FIG.4a

**Description**

FIELD OF THE INVENTION

The present invention relates to anomaly detection in images. More specifically, it relates to the detection and localization of anomalies, for example anomalies of an object, in a digital image.

BACKGROUND PRIOR ART

The distinction between normal and abnormal data is a growing field of search that has a number of applications.

One of them is anomaly detection and localization. Its purpose is to detect automatically if an image is "normal" of "abnormal", and, when an anomaly is detected, localize it. A concrete application of this is the detection, in a production line, of normal or abnormal products. This can be done by taking a picture of each product, and automatically detecting if the picture corresponds to a normal and abnormal product. For example, anomaly detection and localization can be used for quality control in industry. Such a quality control consists in capturing images of products at the output of a production line, then automatically verifying from the digital image if there is an anomaly in the product, and where it is located. It represents a very significant improvement for industry, because human inspection is cumbersome and costly. However, the automatic anomaly detection needs to be both precise and reliable to meet industry standards and efficiently replace visual inspection by employees.

The automatic detection of what is "normal" and what is "abnormal" is a notoriously difficult problem, which has been addressed in different ways, which generally rely on learning and generating one or more data models.

A first approach to tackle this issue consists in performing supervised learning. Supervised learning consists in learning models from labeled input data: each learning sample is associated with a label indicating if the sample is normal and abnormal. Abnormal samples may also be associated with labels indicating a type of anomaly. Once the model is trained, it can be used to classify new samples either as normal or abnormal. The problem with such approaches is that the model can only learn anomalies which have already been encountered. Therefore, they present a strong risk that a sample which is abnormal, but whose anomaly has not been learnt previously will be classified as normal.

On the other hand, unsupervised learning can detect anomalies without needing labeled abnormal learning data. In order to do so, some solutions learn a generative model of the data using a set of learning sample representing normal data: the purpose of such a model is to output a sample that could be considered to be part of the original data distribution, given an input in some compressed data space. In image processing, typical values can be to generate 256*256 pixel images from a 64 dimensions compressed data space. Such models are mainly generative adversarial networks (GAN), variational auto encoders (VAE), PixelCNN, and hybrids of those models. Given a sample, to detect an anomaly, existing solutions encode the sample into its compressed data space, then decode the compressed representation to obtain a new, generated, sample that we call the "reconstruction". They also allow localizing the anomaly, by comparing the reconstruction to the input sample, for example pixel per pixel, or using more global filters, and considering that a zone of the sample that is different from the reconstruction is the localization of an anomaly.

In general, prior art anomaly detection techniques in images are not able to locate anomalies at a pixel precision. Moreover, they also lack the ability to detect anomaly that were not previously learnt, and require from the user a huge effort in data annotation.

Bergmann, P., Löwe, S., Fauser, M., Sattlegger, D., & Steger, C. (2018). Improving unsupervised defect segmentation by applying structural similarity to autoencoders. arXiv preprint arXiv:1807.02011 proposes a method for performing a detection and localization of anomalies. The method of Bergmann et al. uses an autoencoder, wherein both the encoding and decoding neural networks are CNN (Convolutional Neural Network) and the loss is calculated, for each pixel, as a SSIM (Structural SIMilarity). A detection of anomaly in Bergmann requires that the SSIM loss a number of adjacent pixels is above a threshold. Bergmann provides the advantage of providing an anomaly detection and localization method that do not require systematic data annotation by a user.

The error detection of Bergmann however has a major drawback: usually, autoencoders detect dissimilarities at the edges of an anomaly. As a result, anomalous pixels are not usually adjacent to each other.

There is therefore the need of an automatic anomaly detection and localization method for objects in an image, which requires a limited level of annotation and supervision by a user, while allowing a reliable pixel-wise localization of errors.

SUMMARY OF THE INVENTION

To this effect, the invention discloses a computer-implemented method comprising: obtaining an input digital image of an object, captured by a digital camera; using an autoencoder for encoding the input digital image into a compressed image, and decoding the compressed image into a reconstructed image; computing a pixel-wise dissimilarity between the reconstructed image and the input digital image; detecting pixels having a pixel-wise dissimilarity above a threshold as dissimilar pixels; detecting the presence or absence of at least one cluster of dissimilar pixels; if the presence of a cluster of dissimilar pixel is detected, calculating a convex envelope of said cluster of dissimilar pixels, said convex envelope representing an anomaly.

Advantageously, the computer-implemented method further comprises using a supervised multi-class image classification machine learning engine to classify pixels of the input digital image within said convex envelope into a class of anomaly.

Advantageously, the computer-implemented method further comprises using the pixels of the input image within the convex envelope for training a supervised multi-class image classification machine learning engine for detecting anomalies.

Advantageously, the computer-implemented method further comprises, if a cluster of dissimilar pixels is detected: displaying to a user the pixels of the input image within the convex envelope; receiving from the user an anomaly label; using said pixels of the input image within the convex envelope and said label to train said supervised multi-class image classification machine learning engine for detecting anomalies.

Advantageously, the computer-implemented method further comprises simultaneously displaying to the user the pixels within the convex envelope, in the input image and in decompressed image.

Advantageously, a cluster of pixels is defined by: a connected graph of dissimilar pixels, each of them being located at a distance equal to or below a maximum threshold distance of a number of dissimilar pixels equal to or above a minimum threshold of pixels, the edges of said connected graph being equal to the maximum threshold distance; dissimilar pixels that do not belong to said connected graph and are located at a distance equal to or below said maximum threshold distance of a dissimilar pixel belonging to said connected graph.

Advantageously, the computer-implemented method comprises a step of calculating a segmentation mask of an object in the input digital image, and wherein said computing the pixel-wise dissimilarity is performed only for pixels that belong to the segmentation mask.

Advantageously, step of calculating the segmentation mask comprises using a segmentation autoencoder to generate an alpha channel of the reconstructed image, said alpha channel being representative of the segmentation mask, and wherein said segmentation autoencoder has been trained during a training phase comprising: obtaining, for each reference instance object of an object class of a training set, a digital image of the instance object, and a reference alpha channel defining a segmentation mask of the instance object; training the autoencoder using said training set to minimize a loss function which comprises, for a reference instance object, a difference between pixels of an alpha channel of a decompressed vector at the output of the autoencoder, and the reference alpha channel defining the segmentation mask of the reference instance object.

Advantageously, the loss function is a weighted sum of three terms respectively representative of: a Kullbak-Leibler divergence; differences between pixels of the input and reconstructed images; said difference between pixels of the alpha channel of the decompressed vector at the output of the autoencoder, and the reference alpha channel defining the segmentation mask of the reference instance object.

Advantageously, said differences between pixels of the input and reconstructed images are multiplied by said reference alpha channel.

Advantageously, said segmentation autoencoder is said autoencoder for encoding the input digital image into a compressed image, and decoding the compressed image into a reconstructed image.

The invention also discloses a device comprising: an access to a digital camera; at least one processing logic configured for: obtaining an input digital image of an object, captured by the digital camera; using an autoencoder for encoding the input digital image into a compressed image, and decoding the compressed image into a reconstructed image; computing a pixel-wise dissimilarity between the reconstructed image and the input digital image; detecting pixels having a pixel-wise dissimilarity above a threshold as dissimilar pixels; detecting the presence or absence of at least one cluster of dissimilar pixels; if the presence of a cluster of dissimilar pixel is detected, calculating a convex envelope of said cluster of dissimilar pixels, said convex envelope representing an anomaly.

The invention also discloses a computer program product for training a machine learning engine, said computer program product comprising computer code instructions configured for: obtaining an input digital image of an object, captured by a digital camera; using an autoencoder for encoding the input digital image into a compressed image, and decoding the compressed image into a reconstructed image; computing a pixel-wise dissimilarity between the reconstructed image and the input digital image; detecting pixels having a pixel-wise dissimilarity above a threshold as dissimilar pixels; detecting the presence or absence of at least one cluster of dissimilar pixels; if the presence of a cluster of dissimilar pixel is detected, calculating a convex envelope of said cluster of dissimilar pixels, said convex envelope representing an anomaly.

BRIEF DESCRIPTION OF THE DRAWINGS

The invention will be better understood and its various features and advantages will emerge from the following description of a number of exemplary embodiments provided for illustration purposes only and its appended figures in which:

- Figure 1 discloses a picture of an exemplary device in which the invention can be implemented;
- Figure 2 represents a functional scheme of an exemplary device in which the invention can be implemented;
- Figure 3 represents an example of a device in a number of embodiments of the invention;
- Figures 4a to 4d represent a plurality of examples of computer-implemented methods for detecting and localizing anomalies in a digital image in a number of embodiments of the invention;
- Figure 5 represents an example of an autoencoder in a number of embodiments of the invention;
- Figure 6 represents an exemplary step of clustering in a number of embodiments of the invention;
- Figure 7 represents an example of display of a detected anomaly in an embodiment of the invention.

DETAILED DESCRIPTION OF THE INVENTION

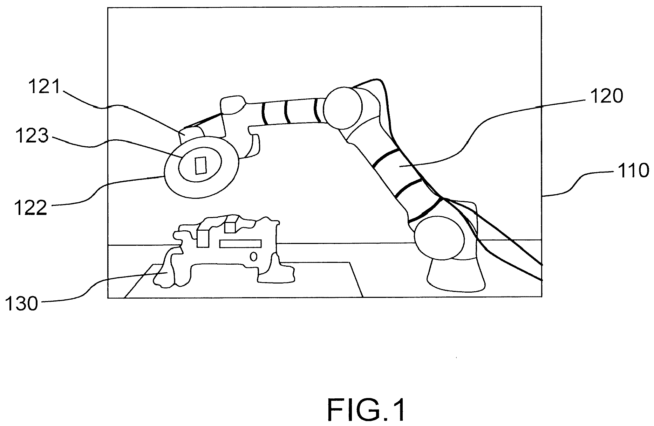

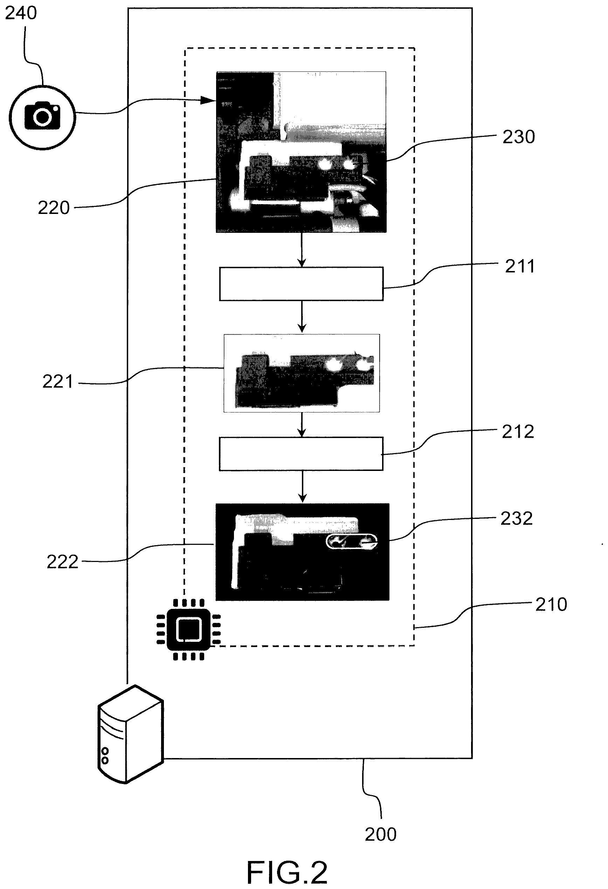

Figure 1 represents a picture of an exemplary device in which the invention can be implemented.
The device consists in a computing device 110 that controls an articulated arm 120. The articulated arm is able to rotate in a number of orientations and directions, in order to move a head 121 around an object 130. The head is provided with LEDs that are able to enlight the object 130 with different light colors and intensities, and a camera 123 which is able to capture pictures of the enlighten object 130. The computing device 110 is also connected to the LEDs and camera to control the lighting, image capture, and receive the captured images. The computing device 110 is therefore able to capture pictures of the object 130 under many different angles of view, and conditions of capture (i.e light, zoom of the camera...).
In a number of embodiments of the invention, the computing device also comprises user interfaces such as input interfaces (mouse, keyboard...) and output interfaces (display, screen...), not shown in the figure 1, to receive commands from the user, and display to the user the pictures captured from the camera, as well as additional information.
In a number of embodiments of the invention, the computing device 110 is configured to use a machine learning engine to generate a segmentation mask of the object 130 in a picture captured by the camera 123, and/or to detect anomalies of the object 130 according to the images captured by the camera 123.
In a number of embodiments of the invention, the computing device 110 may also be configured to enrich a training set of a machine learning engine, and/or train a machine learning engine to generate segmentation masks and/or detect anomalies in pictures of objects similar to the object 130. The figure 2 provides an example of a functional scheme of such a device.
Of course, the exemplary device of figure 1 is not limitative, and the invention may be embedded within many other devices. For example, a computing device of the invention may receive images from a fixed camera.
Figure 2 represents a functional scheme of an exemplary device in which the invention can be implemented.
The device 200 is a computing device intended to perform a detection, localization, and classification of defects in products of an industrial plan. It is therefore intended to be used for quality control of the products at the output of the industrial plant. The device may for example have the physical shape shown by figure 1.
To this effect, the device 200 receives from at least one digital camera 240, for each product to be verified, a digital image 220 of the product. The digital image usually shows the product behind a background of the industrial plant. In the example of figure 2, the product represented in the image 220 has one defect: two spots of grease 230.
The device 200 comprises at least one processing logic 210. According to to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.
The processing logic 210 is configured to execute a segmentation module 211 which is configured to generate, from the image 220, a segmentation mask 221, that is to say obtain the pixels which actually represent the object.
The determination of the segmentation mask can be performed in many different ways. It may notably be performed using the generation of a segmentation mask by a generative machine learning engine, such as a variational autoencoder or a Generative Adversarial Network (GAN). The applicant has filed, the same day than the present application, a European patent application called "Improved generation of segmentation masks for an object in a digital image, based on an auto-encoder trained to generate an alpha channel". This application provides a very efficient method to generate segmentation masks. This method consists in associating to each sample image of a training set a reference alpha layer that defines a segmentation mask of an object in the image. During the training phase, an alpha channel is added to each image, and the autoencoder is trained to minimize a loss which comprises a difference between the alpha channel, and the associated reference alpha channel. Therefore, the autoencoder is trained to generate segmentation masks in the form of an alpha channel, from the existing color components of the image (i.e RGB, Grayscale components...) that are as close as possible to the reference masks/alpha channels. When all the segmentation masks of the training set segment the same kind of objects, or instances of the same kind of product at the output of a production line, the method is able to accurately generate segmentation masks for new objects of this kind. This method is especially well suited for an application relative to the detection of anomalies, because it is able to properly generate the segmentation masks, even for products that comprise anomalies that were not encountered in the training set.

The processing logic 210 is further configured to execute an anomaly detection module 222, which is configured to detect the presence or absence of an anomaly from the mask 221, an anomaly being representative of a defect in the object. The anomaly detection module may be further configured to locate and classify the anomaly. In the example of figure 2, the anomaly detection module 212 shall detect that the image comprises an anomaly, locate this anomaly 232, and classify the anomaly as grease.

The anomaly detection module 212 also relies on generative machine learning engine, such as a variational autoencoder or a Generative Adversarial Network (GAN). The segmented object is for example encoded and decoded by a variational autoencoder, then a pixel-wise difference is calculated between the input image of the object, and the reconstructed image of the object. Pixels whose pixel-wise difference is above a threshold are considered as dissimilar pixels, and the presence of clusters of dissimilar pixels is tested. A cluster of dissimilar pixel is considered as representing an anomaly.

This error detection provides a number of advantages. It firstly provides an error detection which is precise at a pixel level. The use of a clustering algorithm allows detecting an error if a plurality of dissimilar pixels are present in the same area, but does not require that the pixel are contiguous. Thus, the threshold for deciding that a pixel is a dissimilar one can be fine tuned. In addition, many different types of anomalies can be detected, even anomalies that were not previously encountered in a training set. In addition, this method being able to well discriminate normal from abnormal samples, only a limited supervision of from the user is needed.

When used together, the segmentation module and the anomaly detection module also provide advantageous synergetic effects. Indeed, a good segmentation of objects allows the anomaly detection to be trained only on a defined type of objects, without being affected by the background. This greatly improves the training of the anomaly detection. In addition, one of the problems faced by prior art solutions that rely on pixel-wise differences to detect anomalies is the potential presence of a number incorrect detection of dissimilar pixels at the edge of the detected object (i.e background pixels which are detected as dissimilar pixels of the object). A precise segmentation of objects, such as the one provided by the segmentation module 211, overcomes this problem, by directly providing to the anomaly detection an image of the object unaffected by background pixels.

As explained above, both the segmentation module 211 and the anomaly detection module 212 are based on a generative machine learning engine. They may use the same generative machine learning engine. This allows combining the training of the two modules, and ensuring the coherence of operations between the two modules. For example, the segmentation module 211 and the anomaly detection module 212 may be based on the same variational autoencoder, which may use two deep CNNs for respectively encoding and decoding the image. Thus, a single encoding and decoding of each image by the autoencoder is required for both segmenting and detecting anomalies. Moreover, the anomaly detection in module 212 can be performed simply, by evaluating pixel dissimilarities only for pixels that belong to a segmentation mask defined by the alpha channel which has been generated by the autoencoder.

The device 200 is provided by means of example only of a device in which the invention may be implemented. This example is however not limitative, and the invention is applicable to a large number of applications for which a precise anomaly detection and/or a limited user supervision are required. In addition, the exemplary structure of figure 2 is also not limitative. For example, the computations may be performed on a plurality of different devices, some parts of the computations may be performed in a remote server, the images may be obtained from a database of images rather than an instantaneous capture. In addition, even if figure 2 describes a combination of a segmentation, then anomaly detection, anomaly detection may be performed without preliminary segmentation of an object. Similarly, many types of different segmentation methods may be used according to various embodiments of the invention.

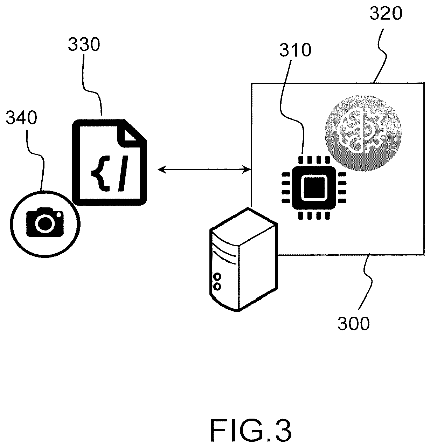

Figure 3 represents an example of a device in a number of embodiments of the invention.

The device 300 is a computing device. Although represented in figure 3 as a computer, the device 300 may be any kind of device with computing capabilities such as a server, or a mobile device with computing capabilities such as a smartphone, tablet, laptop, or a computing device specifically tailored to accomplish a dedicated task.

The device 300 comprises at least one processing logic 310.

The processing logic 300 is configured to obtain an input vector representing an input data sample 330 representing a digital image.

To this effect, the device 300 comprises an access to at least one digital camera 340. The digital camera may either be part of the device, or may be connected to the device 300. Different kinds of wired or wireless connections to the camera 340 may be used.

In a number of embodiments of the invention, the device 300 is intended to perform quality control at the output of an industrial plan. The digital camera is thus placed at the output of the industrial plan, and is configured to capture images of each product at the end of the production line. The device 300 is then configured to segment the object representing product on the image, and detect if the product presents a defect.

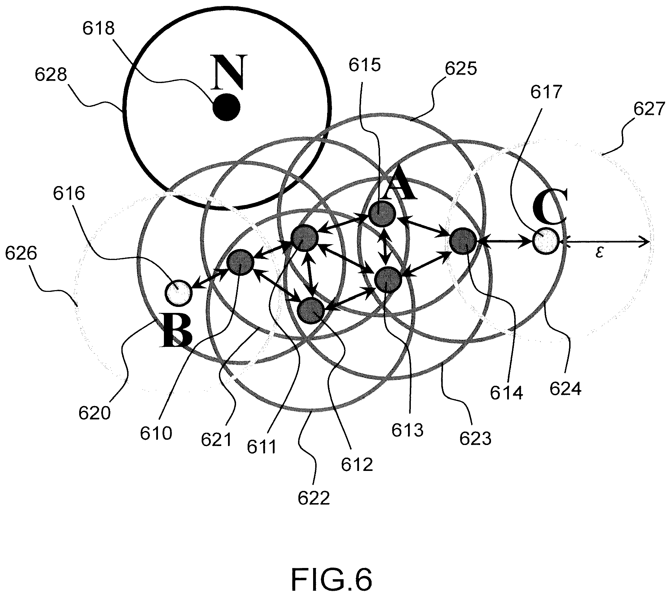

The processing logic 310 is configured to execute an autoencoder 320. An autoencoder is a type of artificial neural network that consists in encoding samples to a representation, or encoding of lower dimension, then decoding the sample into a reconstructed sample, and is described for example in Liou, C. Y., Cheng, W. C., Liou, J. W., & Liou, D. R. (2014). Autoencoder for words. Neurocomputing, 139, 84-96. The principle of autoencoder is described in more details with reference to figure 6.

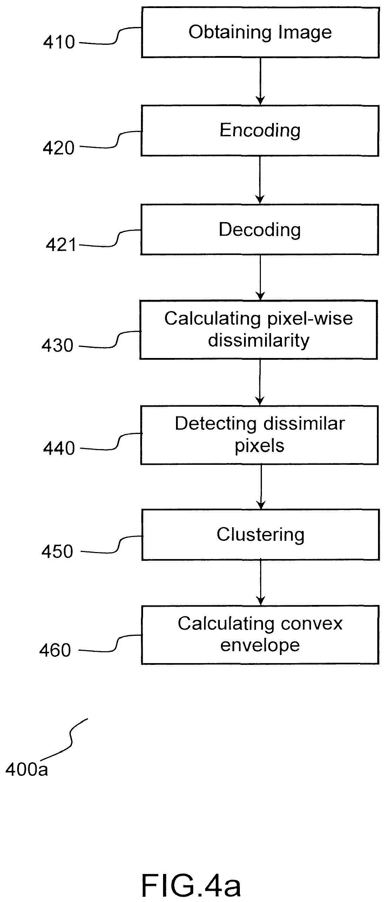

The pixel-wise differences between the reconstructed and the input samples are used to detect the presence of anomalies, as will be described in more details in figures 4a to 4d.

The autoencoder 320 can be initially trained with images of different instances of the same product for which anomaly detection is needed. For example, if the device 300 is intended to perform quality control in a tire factory, the autoencoder 320 may be trained with images of tires, in order to be trained to encode this kind of objects.

Figures 4a to 4d represent a plurality of examples of computer-implemented methods for detecting and localizing anomalies in a digital image in a number of embodiments of the invention.

Figure 4a represents a first example of a computer-implemented method for detecting and localizing anomalies in a digital image in a number of embodiments of the invention.

The method 400a aims at detecting and localizing anomalies in an image. It is more specifically applicable to the detection of anomalies of objects in an image. The method 400a is especially well suited for performing quality control of the production of an industrial plant based on pictures of the products, that is to say detect based on a picture of a product if the product is affected by an anomaly, and where the anomaly is represented in the picture. The method 400a may for example be implemented by the devices 200 or 300.

The method 400a comprises a first step 410 of obtaining an input digital image of an object, captured by a digital camera. The image can be obtained in many different ways. For example, it can be extracted from a database, or captured by a camera such as the camera 340.

The method 400a further comprises a second and third steps of using an autoencoder such as the autoencoder 320 for encoding 420 the input digital image into a compressed image, and decoding 421 the compressed image into a reconstructed (also called decompressed) image. If necessary, the input digital image can be converted to a vector that is fed to the autoencoder. The input digital image may also, in a number of embodiments of the invention, be transformed to be fed to the autoencoder. For example, it can be subsampled, or a color transform can be applied to the image.

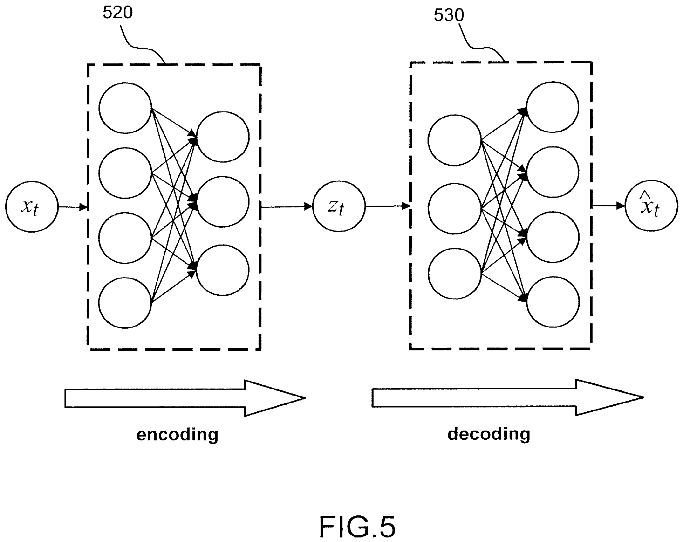

The autoencoder 320 has been previously trained, during a training phase, to encode and decode digital images. The functioning of an autoencoder according to the invention is described in more details with reference to figure 5. Thus, the autoencoder is able to encode an image into a compressed image in a lower-dimension latent space, which represents the essential features of the image, and decode the compressed image into a decompressed (or reconstructed) image, which provides a representation of what the image "would look like" if no anomaly were present.

Advantageously, the training set used for training the autoencoder comprises objects of the same class than the object for which anomalies need to be detected. For example, if the method 400a is intended to detect anomalies for a certain kind of perfume bottle at the end of a production line, the autoencoder may advantageously have been trained with pictures of the same kind of perfume bottle, the picture being captured if possible in similar conditions (i.e zoom, angle of view, distance to the product...) so that the latent space of the autoencoder is further optimized for representing a product, in defined conditions of capture. The same principle can be used for detecting anomalies for any kind of object or product.

The method 400a further comprises a fourth step 430 of computing a pixel-wise dissimilarity between the reconstructed image and the input digital image. This consists in calculating, for each pixel, a dissimilarity between the pixel of the reconstructed image, and the corresponding pixel if the input digital image. According to various embodiments of the invention, the dissimilarities can be calculated on at least one color layer of the image. For example, a dissimilarity can be calculated using differences of pixels in a Grayscale layer, a sum of the absolute differences calculated in each of the three Red, Green and Blue layers of RGB images, or a luminance layer of an image in the YCbCr or YUV space. The dissimilarity can be calculated, for each layer, in different ways. For example, a difference, absolute difference or a squared difference may be used.

In a number of embodiments of the invention, an absolute value of the difference between each pixel in the reconstructed image and the corresponding pixel in the input digital image is calculated on a luminance layer (e.g grayscale layer of Y layer of a YCbCr or YUV colorspace.

The step 430 therefore allows obtaining, for each pixel, and indication whether it was properly represented by the autoencoder, because the higher the dissimilarity, the bigger the difference between the input image and the reconstructed image. The anomalies or defects are expected not to be properly represented by the autoencoder, because the optimization of the autoencoder during the training phase implies that pixels that belong to an anomaly will not be well encoded, the autoencoder trying to reconstruct a standard-looking sample. Thus, high pixel dissimilarities are more frequently encountered in anomalous areas of an object.

The method 400a further comprises a fifth step 440 of detecting pixels having a pixel-wise dissimilarity above a threshold as dissimilar pixels.

This step consists in detecting pixels having a high dissimilarity (i.e pixels whose dissimilarity is above a threshold) as dissimilar pixels. It can be implemented in different ways. For example, a predefined parameter threshold can be used: a threshold is set at the beginning of the method 400a, and all the pixels having a dissimilarity above the threshold are considered as dissimilar pixels.

Alternatively, a percentage, or ratio, of the pixels that have the highest dissimilarity are considered as dissimilar. For example, the 1% of pixels that have the highest dissimilarity may be considered as dissimilar pixels. Therefore, the threshold is not fixed, and is dependent upon the dissimilarities of all the pixels in the image. Such embodiment provides the advantage that only the relative values of dissimilarity are taken into account. The detection of a pixel as a dissimilar pixel is therefore only dependent upon a comparison between its dissimilarity and a dissimilarity of the other pixels in the image, and is thus not dependent upon conditions of capture such as the general luminosity of the image.

At the output of step 450, a map of dissimilar pixel is established. If there is no anomaly in the image, the dissimilar pixels will be fairly equally distributed over the image. On the other hand, if an anomaly is present, a high concentration of dissimilar pixel will be found in the area where the anomaly lies.

The method 400a further comprises a sixth step 450 of detecting the presence or absence of at least one cluster of dissimilar pixels. A cluster of dissimilar pixels designates a set of dissimilar pixels that are closely located, in an area of high density of dissimilar pixels. It however does not require that the dissimilar pixels are neighbor pixels. As will be shown below, the cluster of dissimilar pixels are used to detect and locate anomalies.

The detection of a cluster of dissimilar pixels provides a number of advantages: a cluster will be detected only if a plurality of closely located dissimilar pixels is detected. Thus, a single dissimilar pixel is not sufficient to trigger the detection of an anomaly. Meanwhile, it is not necessary that the dissimilar pixels are neighbors for an anomaly to be located: the presence of a cluster of dissimilar pixels therefore provides an excellent indication of the presence of an anomaly, which in the same time reduces the rate of false positives, and is able to detect virtually all that abnormal zones, if the dissimilarity threshold has been correctly selected.

According to various embodiments of the invention, a large number of different clustering algorithms may be used by the step 450.

In a number of embodiments of the invention, the clustering is performed by the algorithm called DBSCAN, described by Ester, M., Kriegel, H. P., Sander, J., & Xu, X. (1996, August). A density-based algorithm for discovering clusters in large spatial databases with noise. In Kdd (Vol. 96, No. 34, pp. 226-231). The principle of this algorithm is briefly discussed with reference to figure 6. The invention is however not restricted to this example, and various clustering methods may be used.

The method 400a further comprises, if the presence of a cluster of dissimilar pixels is detected, a seventh step of calculating a convex envelope of said cluster of dissimilar pixels.

A convex envelope, also called convex hull or convex closure, is generally defined as the smallest convex set that comprises a set of points. Thus, in the course of the invention, a convex envelope of a cluster of dissimilar pixels is the smallest convex set of pixels that comprises all the pixels that form the cluster.

Many different methods may be used for determining the convex envelope. For example, one suitable method have been disclosed by Thang, X., Tang, Z., Yu, J., & Guo, M. (2010). A fast convex hull algorithm for binary image. Informatica, 34(3).

The use of the convex envelope allows extracting a coherent region from a cluster of pixels, which may be formed of a plurality of sparse dissimilar pixels. The convex envelope therefore represents an anomalous region of the image.

The method 400a provides a very efficient method for detecting and locating anomalies in an image.

Indeed, as explained above, the clustering of dissimilar pixels provides a very reliable indication of the presence of anomalies, and the use of a convex envelope allows forming a coherent region that represents the anomaly from the cluster.

In addition, the determination of dissimilar pixels from the image reconstructed by the auto-encoder allows a pixel-wise localization of anomalies, while the clustering prevents a single, or a limited number of dissimilar pixels to generate a false positive detection.

The method 400a is also able to detect anomalies, even for types of anomalies that were not present in the training set of the autoencoder. Indeed, an anomaly is detected when dissimilar pixels are detected between the reconstructed image, representative of the standard distribution of images, and the input image. Thus, dissimilar pixels are detected if an anomaly is present, even if it belongs to a type of anomaly that was not previously encountered.

The method 400a can also be finely tuned, because it requires only a limited number of parameters: a threshold of dissimilarity or a target ratio of dissimilar pixels, and few clustering parameters such as a pixel density and maximum distance between pixels of a cluster -see figure 6 for more details about possible parameters of the clustering.

Finally, a supervision by a user is required only when a cluster of dissimilar pixels is detected. As the method reduces the false positive rate, the method 400a requires little supervision by a user.

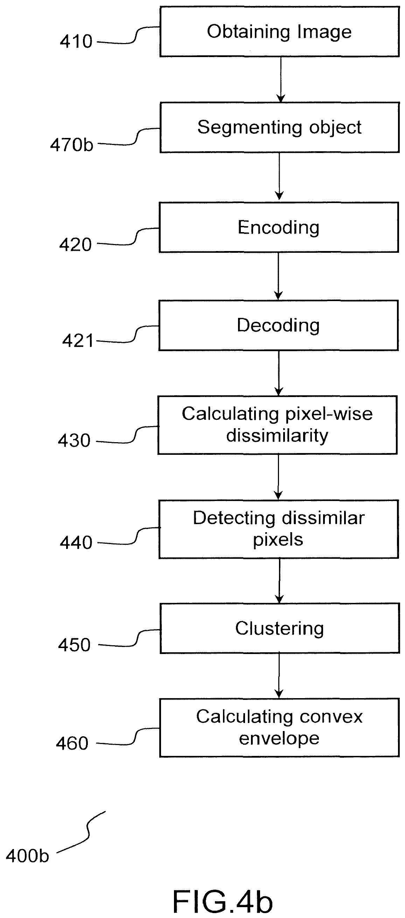

If a plurality of different clusters of dissimilar pixels has been detected in the image, a calculation of convex envelope can be performed for each cluster. The subsequent steps that will be described in figures 4b to 4d can also be repeated for each cluster. Thus a plurality of different anomalies can be detected and located.

Figure 4b represents a second example of a computer-implemented method for detecting and localizing anomalies in a digital image in a number of embodiments of the invention.

In some cases, the anomalies that are aimed to be detected relate to a defined type of objects that are represented in the image. For example, for an anomaly detection at the output of an industrial plant, the anomalies of a certain type of object are detected (for example anomalies in perfume bottle if the industrial plant produces perfume bottles, anomalies in a type of pan which is produced by the industrial plan, etc.). In such cases, the efficiency of the method may be reduced by the variations of the surroundings of the objects (i.e background, other objects in the image...).

In order to further improve the anomaly detection in such case, the method 400b comprises all the steps of the method 400a, and further comprises a step 470b of calculating a segmentation mask of an object in the input digital image.

The segmentation mask defines the pixels that represent the object or not.

In the method 400b, the step 430 of computing the pixel-wise dissimilarity are performed only on pixels that belong to the segmentation mask. This means that only the pixels that represent the object wherein anomalies are aimed to be detected are encoded by the autoencoder, and that an anomaly is detected only for these pixels.

Moreover, reconstruction errors at the edges of the object are avoided.

This improves the efficiency of the method, because variations of the background of the object are not considered. Moreover, if the autoencoder has been trained using images of instances of objects of the same type than the object that have been segmented, and the autoencoder is very efficient at encoding this type of object. Therefore, the likelihood that dissimilar pixels are actually representative of an anomaly is increased.

According to various embodiments of the invention, a number of different segmentation techniques may be used.

For example, as displayed in figure 4b, a first segmentation technique can be applied to the input image to segment an object, and the subsequent steps (encoding 420, decoding 421, calculating pixel-wise dissimilarity 430, detecting dissimilar pixels 440...) can be applied only on the pixel that belongs to the detected segmentation mask.

For example, the applicant has filed, the same day than the present application, a European patent application named *"Improved generation of segmentation masks for an object in a digital image, based on an auto-encoder trained to generate an alpha channel"*. This patent application discloses a segmentation method which provides very efficient results.

This method relies on using an autoencoder to generate a segmentation mask of an instance of a class of objects as an alpha channel of the image. That is to say, the alpha channel defines if a pixel belongs to the object or the background. This can be achieved in many different ways. For example, the alpha value can be defined in a scale ranging from 0 (completely transparent) to 1 (completely opaque). Thus, an alpha value of 0 can be set for any pixel deemed to belong to the background, and a value of 1 for each pixel deemed to belong to the object. Of course, this convention is not limitative, and the skilled man could define any convention for the definition of pixels belonging to the object or the background in the alpha channel. The segmentation is advantageously specifically trained for a defined class of objects. For example, the autoencoder can be trained to generate segmentation masks for any class of objects: cars, spoons, vehicle parts. The class of objects can also be a more precise class, such as a defined product at the output of an industrial plant.

The autoencoder is trained, in a training phase, to generate segmentation masks. To this effect, a training set comprises reference images of instances of objects of a defined class. Each reference image is associated with a reference alpha channel that defines a reference segmentation mask for the instance object in the reference image. These reference segmentation masks can be obtained in different ways. For example, an expert user can define manually the appropriate segmentation mask for each reference image. The reference segmentation masks can also defined in a more efficient way. For example, the applicant has filed a patent application named *"Improved generation of segmentation masks for training a segmentation machine learning engine"* the same day as the present application, which provides an efficient technique for generating reference segmentation masks for a training set of reference images.

During the training phase, the autoencoder is tuned over successive iterations, in order to minimize, over the whole training set, a loss function.

The loss function comprises, for each reference image, a difference between the alpha channel of the reconstructed vector, and the associated reference alpha channel representing the segmentation mask. Stated otherwise, one of the terms of the loss function of the autoencoder during the training phase consists in taking into account the differences between the alpha channel of the output vector, and the reference alpha channel.

Therefore, the autoencoder learns in the same time, during the training phase, to encode instances of objects belonging to the class, and to generate alpha channels that are representative of segmentations masks of the instance of the object.

At inference time, for example in step 470b, the autoencoder is thus able to generate automatically segmentation masks of an object as an alpha channel of the image. Therefore, only the pixels whose value of the alpha channel indicates that they belong to the object are taken into account for subsequent steps.

Although, in figure 4b, the segmentation 470b is displayed as a preliminary step, this example is not limitative. For example, in a number of embodiments of the invention, the same autoencoder is used to generate the segmentation masks, and obtain a decompressed image of the objects wherein pixel-wise dissimilarities will be calculated. Therefore, in such embodiments, there is no separate step 470b, but the segmentation is performed at the output of step 421, by checking the alpha values for each pixel, to verify the pixels that belong to the segmented object or not.

Afterwards, the subsequent steps 430, 440, 450 are performed only on the pixels within the segmentation mask defined by the alpha channel in the decompressed image at the output of step 421.

This simplifies the calculation. In addition, this simplifies the training phase, because a single autoencoder needs to be trained, for both the segmentation and the anomaly detection.

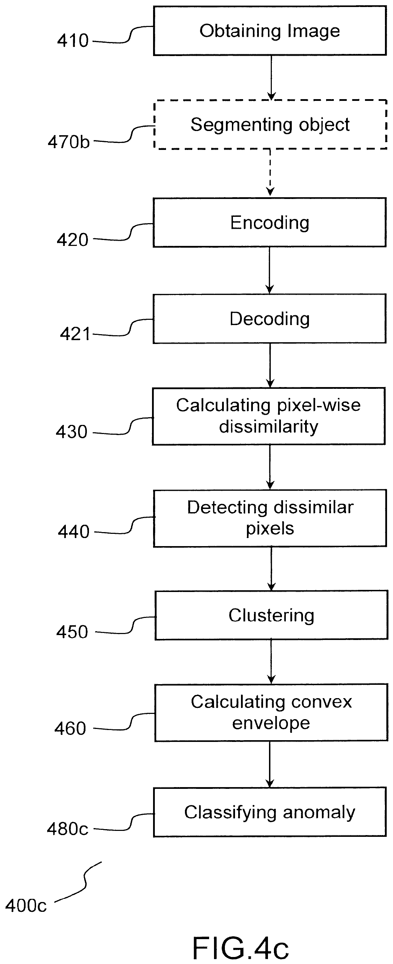

Figure 4c represents a third example of a computer-implemented method for detecting and localizing anomalies in a digital image in a number of embodiments of the invention.

The method 400c may be based on any of the embodiments disclosed with reference to figures 4a and 4b. It may or may not comprise a step 470b of segmentation.

In addition to the steps of the methods 400a or 400b, the method 400c comprises a step 480c of classifying 480c an anomaly based on pixels within a convex envelope of dissimilar pixels.

In substance, the step 480c consists in analyzing the pixels of a convex envelope representing an anomaly, within the input image wherein defects are apparent, and identifying a class of anomaly which corresponds to this envelope.

According to various embodiments of the invention, any multi-class image classification machine learning engine may be used for the classification step 480c. For exemple, Yolact, U-Net, DeepLab or a FCN (Fully Connected Network) can be used.

The multi-class image classification machine learning engine may be trained under the supervision of a user, which labels each anomaly with a class of anomaly.

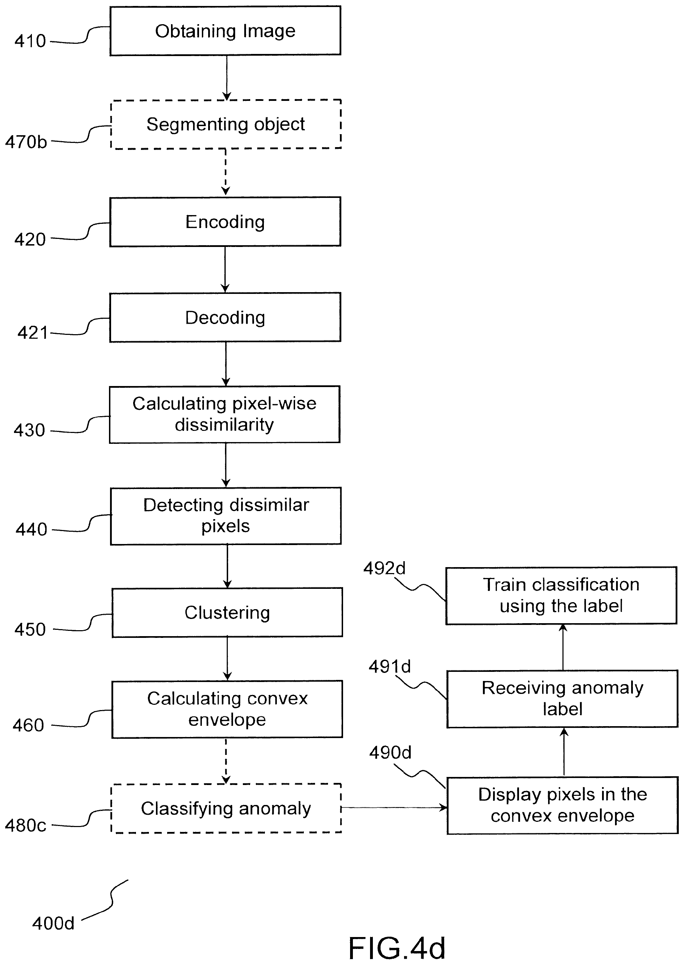

The training of the multi-class image classification machine learning engine may be performed in different manners. An initial training may be performed using an initial set of images of abnormal objects. The training set of the machine multi-class image classification machine learning engine may also be continuously enriched by submitting, when an anomaly is encountered, the corresponding image to the user for classification. This is described in more details with reference to figure 4d.

Figure 4d represents a fourth example of a computer-implemented method for detecting and localizing anomalies in a digital image in a number of embodiments of the invention.

The method 400d may be based on any of the embodiments discussed with figures 4a to 4c, that is to say any of the methods 400a, 400b or 400c.

As explained with reference to figure 4c, in a number of embodiments, once an anomaly is detected, a multi-class image classification machine learning engine is used to classify the anomaly based on the pixels in the convex envelope.

The method 400d aims at enriching the training set of the multi-class image classification machine learning engine with new training sample, when an anomaly is detected.

To this effect, once the convex envelope is obtained, the pixels in the convex envelope are displayed to a user at step 490d. The pixels in the convex envelope are displayed at least in the input image, which corresponds to the instantaneous capture, so that the user can check the detected anomaly.

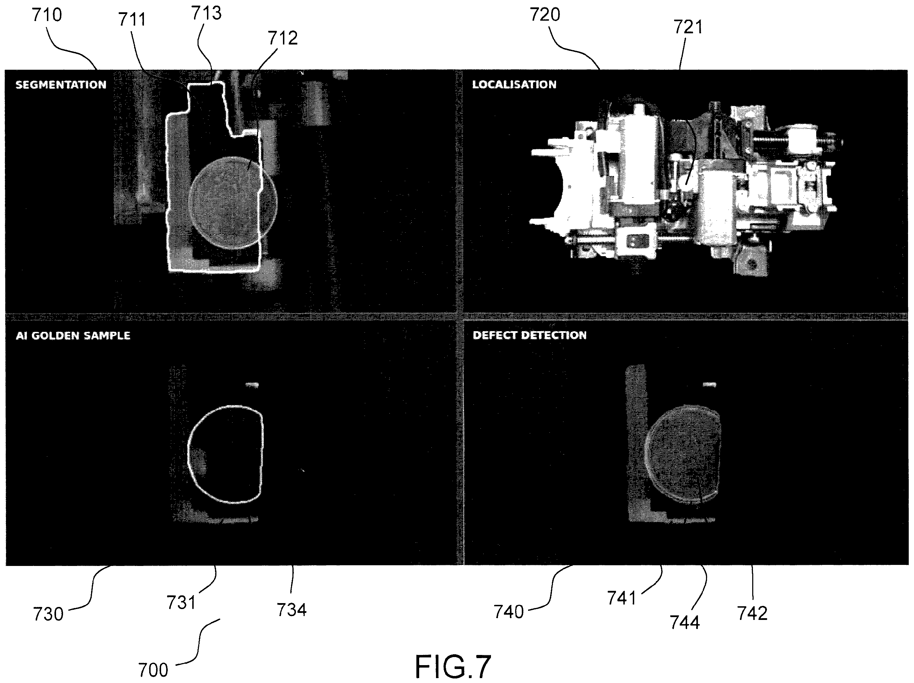

In a number of embodiments of the invention, the pixels are displayed for both the input image, which represents the actual image that was capture, and the decompressed image, which displayed the image reconstructed/decompressed by the autoencoder, i.e the image as it would be expected to be if no anomaly were present. Thus, the user can easily compare the actual image, and the image as it would look like if no anomaly were present. An example of such a display is provided in figure 7.

The convex envelope may be displayed in many different ways according to various embodiments of the invention. For exampte, Only the content of the envelope may be displayed. Alternatively, the whole images may be displayed, and the convex envelope may be highlighted. More generally, and possible display that allows the user to clearly identify what are the pixels that belong to the envelope may be used.

The method 400d further comprises a step 491 d of receiving from the user an anomaly label. To this effect, the user can associate to a cluster/convex envelope a label for the anomaly (which may also be a label representative of a lack of anomaly). The label may be for example entered by the user, selected in a list and may be either chosen in existing labels or created.

Thus, the user can confirm or not the presence of an anomaly, and indicate what is the type of the anomaly.

Thus, the supervised multi-class image classification machine learning engine for detecting anomalies can be trained using the pixels in the convex envelope in the initial image, and the label in a step 492d. This can be used either for an initial training, or a further training of the supervised multi-class image classification machine learning engine. The cluster of pixel, and associated label, can for example be used to enrich an existing training set that will be used to train again the supervised multi-class image classification machine learning engine.

If a plurality of different clusters of dissimilar pixels has been detected in the image, this can be repeated for each cluster.

This method provides a number of advantages. As explained above, the detection of anomaly by the method according to the invention is efficient, and does not produce a lot of false positives. Therefore, only a few samples will be considered as abnormal. Thus, the amount of supervision needed by the user is limited. Meanwhile, the user can focus on the labeling of actual errors.

In a number of embodiments of the invention, the method 400d comprises the step 480c of classification of the anomaly. Thus, the user can view the label that is currently assigned to the anomaly by the supervised multi-class image classification machine learning, and modify it if the classification is incorrect. Thus the user can confirm or not the classification. This can for example be used for further training the supervised multi-class image classification machine learning engine using reinforcement learning.

Figure 5 represents an example of an autoencoder in a number of embodiments of the invention.

Autoencoders have been described for example in Liou, Cheng-Yuan; Huang, Jau-Chi; Yang, Wen-Chie (2008). "Modeling word perception using the Elman network". Neurocomputing. 71 (16-18), and Liou, Cheng-Yuan; Cheng, Wei-Chen; Liou, Jiun-Wei; Liou, Daw-Ran (2014). "Autoencoder for words". Neurocomputing. 139: 84-96. Autoencoders are a type of neural networks which are trained to perform an efficient data coding in an unsupervised manner.

An autoencoder consists in a first neural network 520, that encodes the input vector $x_t$ into a compressed vector noted $z_t$ (t representing the index of the iteration), and a second neural network 530 that decodes the compressed vector $z_t$ into a decompressed or reconstructed vector $\hat{x}_t$. According to various embodiments of the invention, each of the first neural network 520, and the second neural network 530 is a deep Convolutional Neural Network (CNN). Indeed, the deep CNNs are known as being very efficient for image processing.

The compressed vector $z_t$ has a lower dimensionality than the input vector $x_t$ and the reconstructed vector $\hat{x}_t$: It is expressed using a set of variables called latent variables, that are considered to represent essential features of the vector. Therefore, the reconstructed vector $\hat{x}_t$ is similar, but in general not strictly equal to the input vector $x_t$.

It is possible, at the output of the decoding, to compute both a reconstruction error, or loss function, and a gradient of the loss function.

For training the autoencoder, a plurality of iterations are performed, each comprising the encoding and decoding of samples of the training set, the calculation of a loss function, and the adaptation of the autoencoder to minimize the lost function. By doing so, the latent variables of the compressed vectors p are trained to represent the salient high-level features of the training set. Stated otherwise, the training phase of the auto-encoder provides an unsupervised learning of compressing the training samples into a low number of latent variables that best represent them.

In general, the encoding and decoding is called the forward pass, the adaptation of the autoencoder, which consists notably in adapting the weight and biases of the neural network depending on the gradient of the loss function, is called the backward pass, and a complete forward and backward pass for all the training samples is called an epoch.

In a number of embodiments of the invention, the autoencoder is a variational autoencoder (VAE). The variational autoencoders are described for example by Kingma,, D. P., & Welling, M. (2013). Auto-encoding variational bayes. arXiv preprint arXiv:1312.6114, or Diederik P. Kingma and Volodymyr Kuleshov. Stochastic Gradient Variational Bayes and the Variational Autoencoder. In ICLR, pp. 1-4, 2014..The variational auto-encoder advantageously provides a very good discrimination of normal and abnormal samples on certain datasets. The invention is however not restricted to this type of autoencoder, and other types of autoencoder may be used in the course of the invention.

The loss function is noted $L(x_t, \hat{x}_t)$, and can be for example a quadratic function:

$$L(x_t, \hat{x}_t) = \|x_t - \hat{x}_t\|^2$$

*(Equation 1)*

The gradient of the loss function can be noted $\nabla_{x_t} L$.

However, this is provided by means of example only, and different losses may be used. In particular, the quadratic function may be replaced by another function representative of the distortion between the input and the decompressed samples.

According to various embodiments of the invention. The pixels differences can be calculated on one or more color layers. For example, pixel differences can be calculated on RGB layers, grayscale layer, or the Y layer of an YCbCr or YUV color space. The pixel differences can also be integrated within an image difference metric, such as a PSNR (Peak Signal to Noise Ratio), or a SSIM (Structural SIMilarity).

The loss function may also comprise a Kullbak-Leibler (KL) divergence. The KL difference represents the divergence of the compressed samples. The minimization of this term ensures that the latent space has a Gaussian distribution, and thus optimizes the probability that a relevant latent space has been found. This term thus ensures that the latent space is as close as possible to an optimal Gaussian distribution.

In a number of embodiments of the invention, the loss of the variational auto encoder is therefore calculated as:

$$L(x_t, \hat{x}_t) = \|x_t - \hat{x}_t\|^2 - D_{KL}\big(q(z_t|x_t), p(z_t)\big).$$

*(Equation 2)*

This function, which combines a quadratic function and KL divergence, allows ensuring a generative model is used, that is to say that the model is able to produce samples that have never been used for training. As said above, the quadratic function can be replaced by another function representative of a distortion between the input and the output vector, so that the autoencoder is trained to generate images as similar as possible to images of the training set from the compressed samples.

These functions provide a general solution for training the autoencoder to represent the training set.

As noted above, in a number of embodiments of the invention, the autoencoder is trained to perform both an encoding of the image, and a segmentation of an object in the image. In such embodiments, the first neural network 520, and the second neural network 530 are not symmetrical: the input vector $x_t$ represents the color layers of the input image, while the reconstructed (or decompressed) vector $\hat{x}_t$ comprises, in addition, components representative of an alpha channel of the image.

The autoencoder that thus generates an alpha channel defining the segmentation mask. During the training phase, each image of the training set is associated with a reference alpha channel defining the segmentation mask of the reference instance object, and the loss function is a weighted sum of one or more of the following terms:

- a Kullbak-Leibler (KL) divergence;
- a difference between pixels of the input and reconstructed vector;
- a difference between pixels of an alpha channel of a decompressed vector at the output of the autoencoder, and the reference alpha channel defining the segmentation mask of the reference instance object.

Thus, during the training phase, the autoencoder is trained in the same time to provide the best latent representation of the objects, and to generate a segmentation mask which is as similar as possible to the reference segmentation mask. The autoencoder is thus trained to segment the object with a pixel precision.

In a number of embodiments of the invention, the pixel differences are multiplied pixel wise by the reference alpha channel. That is to say, only the reconstruction differences of pixels that actually belong to the reference instance object are taken into account. This allows this term of the loss function to represent only the reconstruction error of the object, and not reconstruction error of the background. Thus, the neural networks are trained, through the minimization of the instance function that comprises a term representative of pixel-wise reconstruction error for the instance objects only, to provide a more efficient representation of the objects. Thus, the loss function becomes:

$$L(x_t, \hat{x}_t) = \|x_t - \hat{x}_t\|^2 . alpha - D_{KL}\big(q(z_t|x_t), p(z_t)\big).$$

*(Equation 3)*

Wherein the term alpha represents the values alpha channel, which means that the quadratic error $\|x_t - \hat{x}_t\|^2$ is taken into account only for pixels that are considered as belonging to the segmentation mask. During the training phase, wherein the reference alpha channel is known, the term alpha represents the ground truth (reference alpha channel), while, during inference, the term alpha is the decompressed alpha channel.

As noted above, the term representative of a difference between the alpha channel of a decompressed vector at the output of the autoencoder, and the reference alpha channel defining the segmentation mask of the reference instance object allows the autoencoder to learn how to generate a segmentation mask for instance objects of the same class, from the color pixels of the image that represent the objects. This difference can for example be calculated as:

$$L = \left\| alpha_t - al\hat{p}ha_t \right\|^2$$

*(Equation 4)*

Wherein $alpha_t$ represents the reference alpha channel, and $al\hat{p}ha_t$ the alpha channel of the reconstructed vector.

The loss function can therefore be expressed as:

$$L(x_t, \hat{x}_t) = \left\| x_t - \hat{x}_t \right\|^2 . alpha - D_{KL}\big(q(z_t|x_t), p(z_t)\big) + Lambda . \left\| alpha_t - al\hat{p}ha_t \right\|^2 .$$

*(Equation 5)*

Wherein $alpha_t$ represents the reference alpha channel, $al\hat{p}ha_t$ the alpha channel of the reconstructed vector, and *Lambda* is a hyperparameter that defines the relative weighting of the alpha channel difference compared to the other terms of the loss.

In a number of embodiments of the invention, the weighting factor Lambda vary over successive learning iterations (or epochs). For example, the relative weighting factors of the KL divergence and of the difference between pixels of the input and reconstructed vector may be equal to zero, or more generally have a relative lower weight during the first iterations (conversely, the relative weight of the alpha channel difference $\| alpha_t - al\hat{p}ha_t \|^2$ is higher during the first iterations).

This allows the first iterations to adapt the weight and biases of the neural networks 520, 530 only, or mainly to generate correct segmentation masks. Afterwards, for successive iterations, weighting factors are set so that the three terms of the loss function are optimized simultaneously. This allows first learning to the neural networks a general solution to generate segmentation masks, then refining the solution to generate even better segmentation masks, efficiently representing the objects and having a good distribution of the solution. This concept, called curriculum learning, avoids converging to a solution in a completely wrong region of the solution space. In the present case, this avoids converging to solutions wherein the objects are well represented, and the distribution is very good, but all pixels of the alpha channel are set to zero, and the generation of segmentation masks does not work.

More generally, the weighting coefficient Lambda of the differences between the decompressed and reference alpha channels can be set to a high value for the first iterations, and decreases over successive iterations, so that the neural networks first learn to generate correct segmentation masks, then learn in the same time to refine the segmentation-masks, provide a bette representation of objects and use a better distribution in the latent space.

Figure 6 represents an exemplary step of clustering in a number of embodiments of the invention.

As explained above, the step 450 of clustering may be performed in different ways.

In a number of embodiments of the invention, the clustering is based on a local density of dissimilar pixels, and distance between dissimilar pixels. In practice, two parameters are considered:

- a distance ε, which is the maximum distance between two pixels of the cluster;
- a minimum number of pixels MinPts, which defines the minimum number of dissimilar pixels that need to be found in a circle of diameter ε around a pixel, for the pixel to belong to a cluster.

The parameters ε and MinPts also implicitly define a minimum local density of dissimilar pixels for a pixel to belong to a cluster.

In the example of figure 6, 9 dissimilar pixels 610, 611, 612, 613, 614, 615, 616, 617 and 618 have been identified. The maximum distance ε is represented on the right of the figure, and 9 circles of radius ε 620, 621, 622, 623, 624, 625, 626, 627 and 628 are represented respectively around the 9 dissimilar pixels 610, 611, 612, 613, 614, 615, 616, 617 and 618. In this example, the minimum number of pixels MinPts is set to 3.

The 6 points 610, 611, 612, 613, 614, and 615 both have three or more dissimilar pixels in their respective circles 620, 621, 622, 623, 624, 625. Therefore, they all belong to a cluster. Meanwhile, these points are all, directly or indirectly, interconnected. For example the point 610 is directly connected to the points 611 and 612 (i.e their distance is lower than ε, and the points 611 and 612 are in the circle 620 of radius ε which is centered around 610), while the point 611 is directly connected to points 610, 611, 615 and 613. Thus, the point 610 is indirectly connected to 615 and 613. All the points 610, 611, 612, 613, 614, and 615 therefore belong to the same cluster.

The points 616 and 617 also belong to the cluster because, even if the number of dissimilar pixels in their circles 626, 627 is below 3, they are located at a distance below ε of pixels of the cluster: 616 is close to 610, and 617 close to 614. The points 616 and 617 can thus be viewed as the boundaries, or edges of the cluster.

On the contrary, the pixel 618 is an isolated dissimilar pixel, because it is at a distance higher than ε of any pixel of the cluster. The pixel 618 therefore does not belong to the cluster.

In summary, the cluster is formed of:

- a connected graph of pixels 610, 611, 612, 613, 614, and 615, each of them being located at a distance equal to or below a maximum threshold distance ε of a number of dissimilar pixels equal to or above a minimum threshold of pixels MinPts, the edges of said connected graph being equal to the maximum threshold distance ε;
- dissimilar pixels 626, 627 that do not belong to said connected graph and are located at a distance equal to or below said maximum threshold distance ε of a dissimilar pixel belonging to said connected graph.

The cluster of dissimilar pixels can for example be detecting using the algorithm called DBSCAN (Density-Based Spatial Clustering ot Applications with Noise), which is described in details by Ester, M., Kriegel, H. P., Sander, J., & Xu, X. (1996, August). A density-based algorithm for discovering clusters in large spatial databases with noise. In Kdd (Vol. 96, No. 34, pp. 226-231).

In general, using a clustering method is advantageous, because it allows detecting local high concentrations of dissimilar pixels, even if the pixels are not neighboring pixels, while not taking into account isolated dissimilar pixels. The detection of clusters of dissimilar pixels is thus well suited for detecting regions wherein high differences are present between the input image and the decompressed image.

The method presented in figure 6 provides very good results. In addition, it can be easily parameter by a user, because it uses only two parameters (the maximum threshold distance ε, and minimum threshold of pixels MinPts).

The invention is of course not restricted to this clustering technique, and virtually any clustering method could be used within the scope of the invention.

Figure 7 represents an example of display of a detected anomaly in an embodiment of the invention.

The display 700 provides an example of display to the user, of the segmentation of an object and detection of anomaly. In this example, the defects are detected on a connector of an engine. The display 700 shows 4 images:

- a general view 720 of the engine, with the location 721 of the connector;
- the input image 710 of the connector 711. A coin 712 is located on the connector 711 which is a defect. The input image 710 also shows a segmentation mask 713 of the connector;
- the image 730 shows, for pixels that belong to the segmentation mask, the decompressed image (golden sample of the autoencoder) of the connector 731;
- the image 740 shows, for pixels that belong to the segmentation mask, the input image with the connector 741 and the coin 742.

The anomaly has been correctly detected by the anomaly detection of the invention, and the convex envelope of the dissimilar cluster is displayed to the user.

According to various embodiments of the invention, this can be displayed to the user in many different ways. In the example of figure 7, the convex envelope is highlighted 742 on top of the input digital picture so that the user can clearly view where the anomaly is. Of course, the invention is not restricted to this example, and any display which allows a user to view the cluster of dissimilar pixels may be used in the invention.

In a number of embodiments of the invention, the convex envelope is also displayed 734 on top of the decompressed picture (i.e golden sample), so that the user is able to view what the same region may look like in an image without defect.

In the display 700, the user can view the convex envelope 734, which is displayed in the same region than the convex envelope 744, allows the user to instantaneously compare the dissimilar region of between the input and the decompressed images, and better understand what caused the anomaly.

Other elements of the GUI, not represented in figure 7, can also allow the user to annotate the anomaly, for example by indicating that it is a coin, to enrich a training set of a supervised machine learning engine configured to classify an anomaly based on the content of the convex envelope 744.

The example of figure 7 demonstrates the ability of the invention to accurately detect and locate anomalies in an image, but also to display the anomaly to the user in a manner which allows the user to very clearly understand what is the anomaly and where it is located.

The examples described above are given as non-limitative illustrations of embodiments of the invention. They do not in any way limit the scope of the invention which is defined by the following claims.

**Claims**

1. A computer-implemented method (400a, 400b, 400c, 400d) comprising:

   - obtaining (410) an input digital image of an object, captured by a digital camera;
   - using an autoencoder (320) for encoding (420) the input digital image into a compressed image, and decoding (421) the compressed image into a reconstructed image;
   - computing (430) a pixel-wise dissimilarity between the reconstructed image and the input digital image;
   - detecting (440) pixels having a pixel-wise dissimilarity above a threshold as dissimilar pixels;
   - detecting (450) the presence or absence of at least one cluster of dissimilar pixels;
   - if the presence of a cluster of dissimilar pixel is detected, calculating (460) a convex envelope of said cluster of dissimilar pixels, said convex envelope representing an anomaly.

2. The computer-implemented method (400c) of claim 1, further comprising using (480c) a supervised multi-class image classification machine learning engine to classify pixels of the input digital image within said convex envelope (744) into a class of anomaly.

3. The computer-implemented method (400d) of claim 1, further comprising using the pixels of the input image within the convex envelope (744) for training a supervised multi-class image classification machine learning engine for detecting anomalies.

4. The computer-implemented method (400d) of claim 3, further comprising, if a cluster of dissimilar pixels is detected:

   - displaying (490d) to a user the pixels of the input image within the convex envelope (744);
   - receiving (491d) from the user an anomaly label;
   - using (492d) said pixels of the input image within the convex envelope and said label to train said supervised multi-class image classification machine learning engine for detecting anomalies.

5. The computer-implemented method of claim 4, further comprising simultaneously displaying to the user the pixels within the convex envelope, in the input image and in decompressed image.

6. The computer implemented method of one of claims 1 to 5, wherein a cluster of pixel is defined by:

   - a connected graph of dissimilar pixels (610, 611, 612, 613, 614, and 615), each of them being located at a distance equal to or below a maximum threshold distance ($\epsilon$) of a number of dissimilar pixels equal to or above a minimum threshold of pixels, the edges of said connected graph being equal to the maximum threshold distance;
   - dissimilar pixels (626, 627) that do not belong to said connected graph and are located at a distance equal to or below said maximum threshold distance ($\epsilon$) of a dissimilar pixel belonging to said connected graph.

7. The computer-implemented (400b, 400c, 400d) method of one of claims 1 to 6, comprising a step of calculating a segmentation mask (470b) of an object in the input digital image, and wherein said computing (430) the pixel-wise dissimilarity is performed only for pixels that belong to the segmentation mask.

8. The computer-implemented method of claim 7, wherein said step of calculating the segmentation mask comprises using a segmentation autoencoder to generate an alpha channel of the reconstructed image, said alpha channel being representative of the segmentation mask, and wherein said segmentation autoencoder has been trained during a training phase comprising:

   - obtaining, for each reference instance object of an object class of a training set, a digital image of the instance object, and a reference alpha channel defining a segmentation mask of the instance object;
   - training the autoencoder using said training set to minimize a loss function which comprises, for a reference instance object, a difference between pixels of an alpha channel of a decompressed vector at the output of the autoencoder, and the reference alpha channel defining the segmentation mask of the reference instance object.

9. The computer-implemented method of claim 8, wherein the loss function is a weighted sum of three terms respectively representative of:

   - a Kullbak-Leibler (KL) divergence;
   - differences between pixels of the input and reconstructed images;
   - said difference between pixels of the alpha channel of the decompressed vector at the output of the autoencoder, and the reference alpha channel defining the segmentation mask of the reference instance object.

10. The computer-implemented method of claim 9, wherein said differences between pixels of the input and reconstructed images are multiplied by said reference alpha channel.

11. The computer-implemented method of one of claims 8 to 10, wherein said segmentation autoencoder is said autoencoder (320) for encoding (420) the input digital image into a compressed image, and decoding (421) the compressed image into a reconstructed image.

12. A device (300) comprising:

   - an access to a digital camera (340);
   - at least one processing logic (310) configured for:

      ◦ obtaining (410) an input digital image of an object, captured by the digital camera;
      ◦ using an autoencoder (320) for encoding (420) the input digital image into a compressed image, and decoding (421) the compressed image into a reconstructed image;
      ◦ computing (430) a pixel-wise dissimilarity between the reconstructed image and the input digital image;
      ◦ detecting (440) pixels having a pixel-wise dissimilarity above a threshold as dissimilar pixels;
      ◦ detecting (450) the presence or absence of at least one cluster of dissimilar pixels;
      ◦ if the presence of a cluster of dissimilar pixel is detected, calculating (460) a convex envelope of said cluster of dissimilar pixels, said convex envelope representing an anomaly.

13. A computer program product for training a machine learning engine, said computer program product comprising computer code instructions configured for:

   - obtaining (410) an input digital image of an object, captured by a digital camera;
   - using an autoencoder (320) for encoding (420) the input digital image into a compressed image, and decoding (421) the compressed image into a reconstructed image;
   - computing (430) a pixel-wise dissimilarity between the reconstructed image and the input digital image;
   - detecting (440) pixels having a pixel-wise dissimilarity above a threshold as dissimilar pixels;
   - detecting (450) the presence or absence of at least one cluster of dissimilar pixels;
   - if the presence of a cluster of dissimilar pixel is detected, calculating (460) a convex envelope of said cluster of dissimilar pixels, said convex envelope representing an anomaly.

121

123

122

130

120

110

FIG.1

FIG.2

FIG.3

410 — Obtaining Image

↓

420 — Encoding

↓

421 — Decoding

↓

430 — Calculating pixel-wise dissimilarity

↓

440 — Detecting dissimilar pixels

↓

450 — Clustering

↓

460 — Calculating convex envelope

400a

# FIG.4a

| | |
|---|---|
| 410 | Obtaining Image |
| 470b | Segmenting object |
| 420 | Encoding |
| 421 | Decoding |
| 430 | Calculating pixel-wise dissimilarity |
| 440 | Detecting dissimilar pixels |
| 450 | Clustering |
| 460 | Calculating convex envelope |

400b

FIG.4b

FIG.4c

```
410 ──┐  ┌─────────────────────────┐
       └─│     Obtaining Image      │
         └─────────────────────────┘
                      │
                      ▼
470b ─┐  ┌─────────────────────────┐
      └──┊     Segmenting object    ┊
         └─────────────────────────┘
                      ┊
                      ▼
420 ──┐  ┌─────────────────────────┐
      └──│        Encoding          │
         └─────────────────────────┘
                      │
                      ▼
421 ──┐  ┌─────────────────────────┐
      └──│        Decoding          │
         └─────────────────────────┘
                      │
                      ▼
430 ──┐  ┌─────────────────────────┐
      └──│  Calculating pixel-wise  │
         │       dissimilarity      │
         └─────────────────────────┘
                      │
                      ▼
440 ──┐  ┌─────────────────────────┐
      └──│   Detecting dissimilar   │
         │          pixels          │
         └─────────────────────────┘
                      │
                      ▼
450 ──┐  ┌─────────────────────────┐
      └──│        Clustering        │
         └─────────────────────────┘
                      │
                      ▼
460 ──┐  ┌─────────────────────────┐
      └──│    Calculating convex    │
         │         envelope         │
         └─────────────────────────┘
                      ┊
                      ▼
480c ─┐  ┌─────────────────────────┐       ┌─────────────────────────┐
      └──┊     Classifying anomaly  ┊──────▶│   Display pixels in the  │ ◀─ 490d
         └─────────────────────────┘       │      convex envelope     │
                                           └─────────────────────────┘
                                                        ▲
492d ─┐  ┌─────────────────────────┐                    │
      └──│   Train classification   │       ┌─────────────────────────┐
         │      using the label     │       │     Receiving anomaly    │ ◀─ 491d
         └─────────────────────────┘        │           label          │
                      ▲                      └─────────────────────────┘
                      │                                 ▲
                      └─────────────────────────────────┘
```

400d

# FIG.4d

**FIG.5**

FIG.6

FIG.7

Europäisches
Patentamt
European
Patent Office
Office européen
des brevets

## EUROPEAN SEARCH REPORT

Application Number

EP 20 31 5058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SABOKROU MOHAMMAD ET AL: "AVID: Adversarial Visual Irregularity Detection", 26 May 2019 (2019-05-26), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, XP047508319, ISBN: 978-3-319-10403-4 pages 488-505, [retrieved on 2019-05-26] * Sections 3, 3.1, 3.2, 3.3, 3.4 * * Section 5 * * figure 1 * | 1-13 | INV. G06K9/34 G06K9/62 G06T7/00 |
| Y | TURCHINI FRANCESCO ET AL: "Convex Polytope Ensembles for Spatio-Temporal Anomaly Detection", 13 October 2017 (2017-10-13), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, XP047450835, ISBN: 978-3-642-17318-9 pages 174-184, [retrieved on 2017-10-13] * Sections 2, 2.1 * | 1-13 | |
| | -/-- | | TECHNICAL FIELDS SEARCHED (IPC) G06K G06T |

The present search report has been drawn up for all claims

| Place of search | Date of completion of the search | Examiner |
|---|---|---|
| The Hague | 26 August 2020 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 20 31 5058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SJOERD VAN STEENKISTE ET AL: "A Case for Object Compositionality in Deep Generative Models of Images", ARXIV.ORG, CORNELL UNIVERSITY LIBRARY, 201 OLIN LIBRARY CORNELL UNIVERSITY ITHACA, NY 14853, 17 October 2018 (2018-10-17), XP080927395, * Section 3.3 * * Section 6 * | 8-11 | |
| A | DAVID ZIMMERER ET AL: "Context-encoding Variational Autoencoder for Unsupervised Anomaly Detection", ARXIV.ORG, CORNELL UNIVERSITY LIBRARY, 201 OLIN LIBRARY CORNELL UNIVERSITY ITHACA, NY 14853, 14 December 2018 (2018-12-14), pages 1-13, XP080993134, * page 2, paragraph 2 - paragraph 3 * * page 3, paragraph 1 * * Section 3 * | 1,7-11 | |
| A | RAN BAKALO ET AL: "Weakly and Semi Supervised Detection in Medical Imaging via Deep Dual Branch Net", ARXIV.ORG, CORNELL UNIVERSITY LIBRARY, 201 OLIN LIBRARY CORNELL UNIVERSITY ITHACA,, 29 April 2019 (2019-04-29), XP081623524, NY 14853 * Section 1. * * figure 1 * | 1-4 | TECHNICAL FIELDS SEARCHED (IPC) |

-/--

The present search report has been drawn up for all claims

| Place of search | Date of completion of the search | Examiner |
|---|---|---|
| The Hague | 26 August 2020 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 31 5058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOVE ESTEBAN ET AL: "Anomaly Detection Over an Ultrasonic Sensor in an Industrial Plant", 26 August 2019 (2019-08-26), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, XP047518642, ISBN: 978-3-319-10403-4 pages 492-503, [retrieved on 2019-08-26] * Section 3.1 * ----- | 1,12,13 | |

TECHNICAL FIELDS
SEARCHED       (IPC)

The present search report has been drawn up for all claims

| Place of search | Date of completion of the search | Examiner |
|---|---|---|
| The Hague | 26 August 2020 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BERGMANN, P. ; LÖWE, S. ; FAUSER, M. ; SATTLEGGER, D. ; STEGER, C.** *Improving unsupervised defect segmentation by applying structural similarity to autoencoders,* 2018
- **LIOU, C. Y. ; CHENG, W. C. ; LIOU, J. W. ; LIOU, D. R.** Autoencoder for words. *Neurocomputing,* 2014, vol. 139, 84-96
- **ESTER, M. ; KRIEGEL, H. P. ; SANDER, J. ; XU, X.** A density-based algorithm for discovering clusters in large spatial databases with noise. *Kdd,* August 1996, vol. 96 (34), 226-231
- **THANG, X. ; TANG, Z. ; YU, J. ; GUO, M.** A fast convex hull algorithm for binary image. *Informatica,* 2010, vol. 34 (3

- **LIOU, CHENG-YUAN ; HUANG, JAU-CHI ; YANG, WEN-CHIE.** Modeling word perception using the Elman network. *Neurocomputing,* 2008, vol. 71 (16-18
- **LIOU, CHENG-YUAN ; CHENG, WEI-CHEN ; LIOU, JIUN-WEI ; LIOU, DAW-RAN.** Autoencoder for words. *Neurocomputing,* 2014, vol. 139, 84-96
- **KINGMA,, D. P. ; WELLING, M.** *Auto-encoding variational bayes,* 2013
- **DIEDERIK P. KINGMA ; VOLODYMYR KULESHOV.** Stochastic Gradient Variational Bayes and the Variational Autoencoder. *ICLR,* 2014, 1-4